# EUROPÄISCHE PATENTSCHRIFT

(11) **EP 4 504 676 B1**
(45) Veröffentlichungstag und Bekanntmachung des Hinweises auf die Patenterteilung: **03.06.2026**
(21) Anmeldenummer: 24732621.8
(22) Anmeldetag: 11.06.2024
(51) Int. Cl.: C04B 7/12

(54) **FARBOPTIMIERUNG AKTIVIERTER TONE MIT AMMONIAK**
COLOR OPTIMIZATION OF ACTIVATED CLAY USING AMMONIA
OPTIMISATION DE COULEUR D'ARGILE ACTIVÉE À L'AIDE D'AMMONIAC

(30) Priorität: 21.06.2023 DE 102023116181; 21.06.2023 LU 103155
(43) Veröffentlichungstag der Anmeldung: 12.02.2025
(73) Patentinhaber: thyssenkrupp Polysius GmbH, 59269 Beckum (DE); thyssenkrupp AG, 45143 Essen (DE)
(72) Erfinder: FLASSPÖHLER, Melanie, 44141 Dortmund (DE); JACOME RINCON, Carlos, 44263 Dortmund (DE)
(74) Vertreter: thyssenkrupp Intellectual Property GmbH
(86) Internationale Anmeldenummer: PCT/EP2024/066005
(87) Internationale Veröffentlichungsnummer: WO 2024/260784

(56) Entgegenhaltungen:
- WO-A1-2016/173795
- WO-A1-2017/202849
- WO-A1-2024/079675
- DE-A1- 102020 211 750
- DE-A1- 102022 209 826
- DE-B4- 102008 020 600

## Beschreibung

Die Erfindung betrifft ein Verfahren zur Farboptimierung von aktivierten Tonen.

Zur Minderung des CO₂-Footprints werden in der Baustoffindustrie zunehmend aktivierte Tone als Bindemittel und Ersatz für Zementklinker verwendet. Im Gegensatz zur Herstellung von Klinker aus Kalkstein wird hier nur wenig oder kein Kohlendioxid aus dem Rohmaterial, dem Ton freigesetzt. Jedoch haben die meisten Tone einen gewissen Gehalt an Eisen, welcher bei der Aktivierung üblicherweise zu Eisen-III aufoxidiert wird und dem Produkt eine ungewünschte rote Farbe gibt. Daher wird der noch heiße aktivierte Ton direkt nach der Aktivierung farboptimiert. Die Farboptimierung erfolgt hierbei üblicherweise in einer der Aktivierungsvorrichtung nachgelagerten Farboptimierungsvorrichtung. Zur Farboptimierung wird beispielsweise Kohle oder Kohlenwasserstoffe, wie zum Beispiel Propan, verwendet. Hierdurch wird jedoch auch im Farboptimierungsprozess Kohlendioxid erzeugt.

Aus der WO 2016 / 173 795 A1 ist eine Anlage und ein Verfahren zur thermischen Behandlung von flugfähigem Rohmaterial bekannt.

Aus der WO 2017 / 202 849 A1 ist ein Klinkerersatzstoff aus Aluminiumsilikat und Dolomit bekannt.

Aus der DE 10 2020 211 750 A1 ist die Energierückgewinnung bei der Kühlung farboptimierter Tone bekannt.

Aus der DE 10 2008 020 600 B4 ist ein Verfahren und eine Anlage zur Wärmebehandlung feinkörniger mineralischer Feststoffe bekannt.

Aus der DE 10 2022 209 826 A1 ist die Vermeidung von Emissionen bei der Herstellung künstlicher Puzzolane aus mineralischem Material, insbesondere Tonen, bekannt.

Aus der WO 2024 / 079 675 A1 ist ein elektrisches Aktivierungssystem und ein Verfahren zur elektrischen Aktivierung und Bereitstellung eines Zementzusatzstoffes bekannt. Aufgabe der Erfindung ist es, eine Vorrichtung und ein Verfahren zur Farboptimierung von aktivierten Tonen bereitzustellen, welches Kohlendioxid-Emissionen vermeidet. Gelöst wird diese Aufgabe durch das Verfahren mit den in Anspruch 1 angegebenen Merkmale.

Vorteilhafte Weiterbildungen ergeben sich aus den Unteransprüchen, der nachfolgenden Beschreibung sowie der Zeichnung.

Eine Vorrichtung zur Durchführung des erfindungsgemäßen Verfahrens dient zur Aktivierung von Tonen. Die Vorrichtung ist zur Aktivierung und zur Farboptimierung ausgebildet. Derartige Vorrichtungen sind umfänglich aus dem Stand der Technik bekannt. Die Vorrichtung weist eine Aktivierungsvorrichtung zur thermischen Aktivierung und eine der Aktivierungsvorrichtung nachgeschaltete Farboptimierungsvorrichtung auf. Die Aktivierungsvorrichtung kann beispielsweise aus einem Vorwärmer und einem Flugstromcalcinator bestehen. Die Farboptimierungsvorrichtung kann beispielsweise aus einem Wirbelschichtreaktor bestehen. Die genaue Ausführung der Aktivierungsvorrichtung und der Farboptimierung ist für die Erfindung beliebig und dem Fachmann in verschiedensten Ausführungsformen bekannt. Vorteil ist, dass es sich um zwei getrennte Verfahrensschritte in zwei getrennten Bauteilen handelt, welche somit unabhängig voneinander optimiert werden können. Insbesondere kann die Aktivierungsvorrichtung entsprechend in einer oxidierenden Umgebung betrieben werden, beispielsweise um Ersatzbrennstoffe sicher zu verbrennen. Die Farboptimierung in der Farboptimierungsvorrichtung erfolgt durch die Ammoniakzuführung in einer reduzierenden Atmosphäre. Auch erlaubt die getrennte Bauweise die optimale Temperatursteuerung. So erlaubt insbesondere die Verwendung von Ammoniak (NH₃) oder NH₃-haltigen Verbindungen als Reduktionsmittel deutlich geringere Temperaturen in der Farboptimierungsvorrichtung im Vergleich zu kohlenstoffhaltigen Reduktionsmitteln, wie zum Beispiel Kohlenstaub.

Erfindungsgemäß weist die Vorrichtung, bevorzugt die Farboptimierungsvorrichtung, eine Zuführung für Ammoniak oder NH₃-haltige Verbindungen auf. Wesentlich ist, dass somit der Farboptimierungsvorrichtung Ammoniak oder NH₃-haltige Verbindungen als Reduktionsmittel zugeführt wird. Damit kann kohlenstoffhaltige Reduktionsmittel wie beispielsweise auf Kohle oder Propan verzichtet werden. Ammoniak oder NH₃-haltige Verbindungen werden zunehmend nachhaltig, also ohne Kohlendioxid als Nebenprodukt beziehungsweise Treibhausgas hergestellt. Somit ermöglicht die Verwendung von Ammoniak oder NH₃-haltige Verbindungen eine kohlendioxidfreie Farboptimierung. Es hat sich gezeigt, dass gerade Ammoniak oder NH₃-haltige Verbindungen als Reduktionsmittel der farbgebenden Eisen-III-Zentren geeignet ist und diese in grau gefärbtes Magnetit umzuwandeln in der Lage ist. Ein weiterer Vorteil von der Verwendung von Ammoniak ist, dass nicht verbrauchtes Ammoniak im Prozess entweder als kohlendioxidfreier Brennstoff eingesetzt werden kann und/oder zur nichtkatalytischen Reduktion von Stickoxiden verwendet werden kann. Somit ist Ammoniak oder NH₃-haltige Verbindungen auch beispielsweise gegenüber regenerativ erzeugtem Wasserstoff vorteilhaft, welcher wenigstens keinen positivsen Einfluss auf Stickoxide hat. Zudem sind die Lagerung und das Handling von Ammoniak oder NH₃-haltige Verbindungen einfacher.

Erfindungsgemäß weist die Farboptimierungsvorrichtung einen Gasauslass auf. Die Aktivierungsvorrichtung weist einen Gaseinlass auf. Der Gasauslass und der Gaseinlass sind zur Überführung von nicht umgesetzten Ammoniak oder NH₃-haltige Verbindungen miteinander verbunden. Hierdurch kann der Ammoniak oder die NH₃-haltige Verbindung entweder als Brennstoff verwendet werden oder dieser wird bevorzugt nach der eigentlichen Verbrennung, beispielsweise und insbesondere eines Ersatzbrennstoffes, zur nicht katalytischen Reduktion von bei der Verbrennung entstandenen Stickoxiden zugeführt.

In einer weiteren Ausführungsform der Erfindung ist die Farboptimierungsvorrichtung ein Wirbelschichtreaktor. Der Wirbelschichtreaktor hat sich für die Farboptimierung mit Ammoniak oder NH₃-haltige Verbindungen als besonders geeignet herausgestellt.

In einer weiteren Ausführungsform der Erfindung ist die Farboptimierungsvorrichtung ein Rohrreaktor.

In einer weiteren Ausführungsform der Erfindung ist die Farboptimierungsvorrichtung ein separater Flugstromreaktor.

Die Erfindung betrifft ein Verfahren zur Farboptimierung eines aktivierten Tones in einer erfindungsgemäßen Vorrichtung. Das Verfahren weist einen ersten oxidativ durchgeführten Aktivierungsschritt und einen zweiten anschließenden Farboptimierungsschritt auf. Die Durchführung getrennter Schritte in getrennten Bauteilen erlaubt die getrennte Optimierung der beiden Schritte.

Zur Farboptimierung im Farboptimierungsschritt wird dem aktivierten Ton Ammoniak oder eine NH₃-haltige Verbindung zugeführt. Es wird eben nicht Kohle oder Propan oder ein vergleichbares kohlenstoffhaltiges Reduktionsmittel zugegeben, welches als Nebenprodukt das Treibhausgas Kohlendioxid erzeugt. Damit ist auch die Farboptimierung klimaneutral durchführbar. Zum anderen hat sich gerade diese Kombination eines aktivierten Tones mit Ammoniak oder NH₃-haltige Verbindungen als vorteilhaft herausgestellt. Vermutlich wirken die Eisenbestandteile des Tones katalytisch auf die Zersetzung des Ammoniaks oder NH₃-haltige Verbindungen zur Erzeugung von Wasserstoff. Auf jeden Fall ermöglicht die Verwendung von Ammoniak oder NH₃-haltige Verbindungen im Vergleich zur Verwendung von kohlenstoffhaltigen Reduktionsmitteln deutlich geringere Temperaturen. Auch dieses führt zur Einsparung von Energie und damit letztendlich zur Vermeidung von Kohlendioxidemissionen.

In einer weiteren Ausführungsform der Erfindung wird die Farboptimierung bei 450 °C bis 900 °C durchgeführt. Bereits in dem Temperaturfenster von 450 bis 550 °C kann somit eine erfolgreiche Farboptimierung durchgeführt werden, was gegenüber dem üblichen höheren Temperaturfenster von 800 bis 900 °C energetisch vorteilhaft ist. Zusätzlich reduziert dieses die Probleme und Risiken einer erneuten Oxidation bei der Abkühlung. In einer weiteren Ausführungsform der Erfindung wird der bei der Farboptimierung nicht umgesetztes Ammoniak oder NH₃-haltige Verbindungen aus der Aktivierungsvorrichtung zugeführt. Hierdurch kann der Ammoniak oder NH₃-haltige Verbindungen als Brennstoff und/oder als Agens für die SNCR verwendet werden, wobei die SNCR Umsetzung auch vorzugsweise in einem Temperaturfenster von 800 °C bis 900 °C durchgeführt, beispielsweise in der Mitte oder am Ende eines Flugstromcalcinators als Bestandteil der Aktivierungsvorrichtung.

In einer weiteren Ausführungsform der Erfindung wird der Ammoniak oder NH₃-haltige Verbindungen in einem Gasgemisch, bevorzugt in einem kohlendioxidhaltigen Gasgemisch zugeführt. Beispielsweise wird als kohlendioxidhaltiges Gasgemisch ein Abgas verwendet.

Im Rahmen des erfindungsgemäßen Verfahrens erfolgt die Verwendung von Ammoniak oder einer NH₃-haltigen Verbindung zur Farboptimierung eines aktivierten Tones. Bisher werden für die Farboptimierung Kohlenstoff oder Kohlenwasserstoffverbindungen oder Wasserstoff verwendet. Die Verwendung von Ammoniak oder NH₃-haltige Verbindungen, insbesondere von grün erzeugtem Ammoniak oder NH₃-haltige Verbindungen eignet sich nicht nur besonders gut für die Farboptimierung, sondern ist auch besonders gut zur kohlendioxidfreien Farboptimierung geeignet.

Nachfolgend ist die erfindungsgemäße Vorrichtung anhand eines in der Zeichnung dargestellten Ausführungsbeispiels näher erläutert.

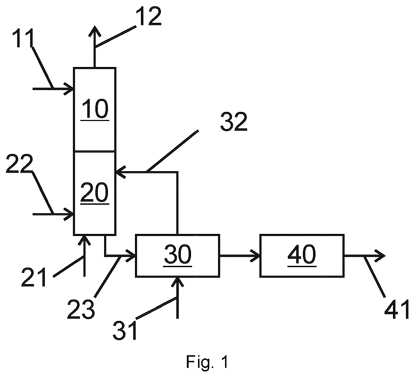

Fig. 1 beispielhafte Vorrichtung

In Fig. 1 ist eine beispielhafte Vorrichtung stark schematisiert gezeigt, anhand der auch das Verfahren beispielhaft dargestellt wird.

Der zu aktivierende Ton wird über die Materialzufuhr 11 in einen Vorwärmer 10 eingebracht, vorgewärmt und von dort in einen Calcinator 20 überführt, wo die thermische Aktivierung des Tones erfolgt. Dem Calcinator 20 werden daher über eine Gaszufuhr ein Gasstrom, welcher aus dem Materialkühler 40 stammen kann, und über die Brennstoffzufuhr 22 Brennstoff zugeführt. Als Brennstoff kann beispielsweise ein Sekundärbrennstoff, zum Beispiel Biomasse, eingesetzt werden. Der aktivierte Ton 23 wird in die Farboptimierungsvorrichtung 30 überführt, beispielsweise ein Wirbelschichtreaktor. Der Farboptimierungsvorrichtung 30 wird Ammoniak über eine Ammoniakzuführung 31 zugeführt. Der Ammoniak reagiert mit den Eisen-III-Verbindungen und führt zu einer Entfärbung / Graufärbung des Produktes. Nicht verbrauchter Ammoniak wird über die Ammoniaküberführung 32 in den Calcinator 20 beispielswiese auch in eine Brennkammer des Calcinators 20 geleitet, wo beispielsweise Ersatzbrennstoffe bei einer Temperatur von 850 °C für mindestens 2 s. verbrannt werden, um dort entstandene Stickoxide nichtkatalytisch umzusetzen. Der aktivierte und farboptimierte Ton wird aus der Farboptimierungsvorrichtung 30 in einen Materialkühler 40 überführt und diesem als fertiges Produkt 41 entnommen.

### Bezugszeichen

- 10: Vorwärmer
- 11: Materialzufuhr
- 12: Abgasauslass
- 20: Calcinator
- 21: Gaszufuhr
- 22: Brennstoffzufuhr
- 23: aktivierter Ton
- 30: Farboptimierungsvorrichtung
- 31: Ammoniakzuführung
- 32: Ammoniaküberführung
- 40: Materialkühler
- 41: Produkt

## Patentansprüche

1. Verfahren zur Farboptimierung eines aktivierten Tones (23) in einer Vorrichtung , wobei die Vorrichtung zur Aktivierung von Tonen, wobei die Vorrichtung zur Aktivierung und zur Farboptimierung ausgebildet ist, wobei die Vorrichtung eine Aktivierungsvorrichtung zur thermischen Aktivierung und eine der Aktivierungsvorrichtung nachgeschaltete Farboptimierungsvorrichtung (30) aufweist, wobei die Farboptimierungsvorrichtung (30) eine Zuführung für Ammoniak oder eine NH₃-haltige Verbindung (31) aufweist, wobei das Verfahren ein ersten oxidativ durchgeführten Aktivierungsschritt und einen zweiten anschließenden Farboptimierungsschritt aufweist, wobei zur Farboptimierung im Farboptimierungsschritt dem aktivierten Ton (23) Ammoniak oder eine NH₃-haltige Verbindung zugeführt wird, **dadurch gekennzeichnet, dass** die Farboptimierungsvorrichtung (30) einen Gasauslass aufweist, wobei die Aktivierungsvorrichtung einen Gaseinlass aufweist, wobei der Gasauslass und der Gaseinlass zur Überführung von nicht umgesetzten Ammoniak oder NH₃-haltige Verbindungen miteinander verbunden sind.

2. Verfahren nach Anspruch 1, **dadurch gekennzeichnet, dass** die Farboptimierungsvorrichtung (30) ein Wirbelschichtreaktor ist.

3. Verfahren nach einem der vorstehenden Ansprüche, **dadurch gekennzeichnet, dass** die Farboptimierungsvorrichtung (30) ein Rohrreaktor ist.

4. Verfahren nach einem der vorstehenden Ansprüche, **dadurch gekennzeichnet, dass** die Farboptimierungsvorrichtung (30) ein separater Flugstromreaktor ist.

5. Verfahren nach einem der vorstehenden Ansprüche, **dadurch gekennzeichnet, dass** die Farboptimierung bei 450 °C bis 900 °C, bevorzugt bei 450 bis 550 °C, durchgeführt wird.

6. Verfahren nach einem der vorstehenden Ansprüche, **dadurch gekennzeichnet, dass** der bei der Farboptimierung nicht umgesetzte Ammoniak oder NH₃-haltige Verbindungen aus der Aktivierungsvorrichtung zugeführt wird.

7. Verfahren nach einem der vorstehenden Ansprüche, **dadurch gekennzeichnet, dass** der Ammoniak oder NH₃-haltige Verbindungen in einem Gasgemisch, bevorzugt in einem Kohlendioxid-haltigen Gasgemisch zugeführt wird.

## Claims

1. Method for color optimization of an activated clay (23) in a device, wherein the device is for activation of clays, wherein the device is designed for activation and for color optimization, wherein the device comprises an activation device for thermal activation and a color optimization device (30) downstream of the activation device, wherein the color optimization device (30) comprises a feed for ammonia or an NH3-containing compound (31), wherein the method comprises a first oxidatively carried out activation step and a second subsequent color optimization step, wherein for color optimization in the color optimization step ammonia or an NH3-containing compound is supplied to the activated clay (23), **characterized in that** the color optimization device (30) comprises a gas outlet, wherein the activation device comprises a gas inlet, wherein the gas outlet and the gas inlet are connected to one another for transfer of unreacted ammonia or NH3-containing compounds.

2. Method according to claim 1, **characterized in that** the color optimization device (30) is a fluidized bed reactor.

3. Method according to one of the preceding claims, **characterized in that** the color optimization device (30) is a tubular reactor.

4. Method according to one of the preceding claims, **characterized in that** the color optimization device (30) is a separate entrained flow reactor.

5. Method according to one of the preceding claims, **characterized in that** the color optimization is carried out at 450 °C to 900 °C, preferably at 450 to 550 °C.

6. Method according to one of the preceding claims, **characterized in that** the ammonia or NH3-containing compounds not reacted during the color optimization are supplied from the activation device.

7. Method according to one of the preceding claims, **characterized in that** the ammonia or NH3-containing compounds are supplied in a gas mixture, preferably in a carbon dioxide-containing gas mixture.

## Revendications

1. Procédé pour l'optimisation de la couleur d'une argile activée (23) dans un dispositif, dans lequel le dispositif est pour l'activation d'argiles, dans lequel le dispositif est conçu pour l'activation et pour l'optimisation de la couleur, dans lequel le dispositif comprend un dispositif d'activation pour l'activation thermique et un dispositif d'optimisation de la couleur (30) en aval du dispositif d'activation, dans lequel le dispositif d'optimisation de la couleur (30) comprend une alimentation pour de l'ammoniac ou un composé contenant du NH3 (31), dans lequel le procédé comprend une première étape d'activation réalisée de manière oxydative et une seconde étape d'optimisation de la couleur subséquente, dans lequel pour l'optimisation de la couleur dans l'étape d'optimisation de la couleur de l'ammoniac ou un composé contenant du NH3 est fourni à l'argile activée (23), **caractérisé en ce que** le dispositif d'optimisation de la couleur (30) comprend une sortie de gaz, dans lequel le dispositif d'activation comprend une entrée de gaz, dans lequel la sortie de gaz et l'entrée de gaz sont reliées l'une à l'autre pour le transfert d'ammoniac non réagi ou de composés contenant du NH3.

2. Procédé selon la revendication 1, **caractérisé en ce que** le dispositif d'optimisation de la couleur (30) est un réacteur à lit fluidisé.

3. Procédé selon l'une des revendications précédentes, **caractérisé en ce que** le dispositif d'optimisation de la couleur (30) est un réacteur tubulaire.

4. Procédé selon l'une des revendications précédentes, **caractérisé en ce que** le dispositif d'optimisation de la couleur (30) est un réacteur à flux entraîné séparé.

5. Procédé selon l'une des revendications précédentes, **caractérisé en ce que** l'optimisation de la couleur est réalisée à 450 °C à 900 °C, de préférence à 450 à 550 °C.

6. Procédé selon l'une des revendications précédentes, **caractérisé en ce que** l'ammoniac ou les composés contenant du NH3 non réagis pendant l'optimisation de la couleur sont fournis depuis le dispositif d'activation.

7. Procédé selon l'une des revendications précédentes, **caractérisé en ce que** l'ammoniac ou les composés contenant du NH3 sont fournis dans un mélange de gaz, de préférence dans un mélange de gaz contenant du dioxyde de carbone.
